(19) Europäisches Patentamt
European Patent Office
Office européen des brevets

(11) Publication number: **0 094 650 B1**

(12) **EUROPEAN PATENT SPECIFICATION**

(45) Date of publication of patent specification: **29.04.92**

(51) Int. Cl.[5]: **C08G 63/54**, C08G 63/20, C08L 67/06, C08K 5/51, C08J 5/24, C08G 63/91

(21) Application number: **83104756.8**

(22) Date of filing: **13.05.83**

(54) **Flame-retardant halogen-containing unsaturated alkyds resins and articles made therefrom.**

(30) Priority: **13.05.82 JP 81034/82**
**10.08.82 JP 139322/82**
**10.03.83 JP 39632/83**
**13.04.83 JP 66202/83**

(43) Date of publication of application:
**23.11.83 Bulletin 83/47**

(45) Publication of the grant of the patent:
**29.04.92 Bulletin 92/18**

(84) Designated Contracting States:
**BE DE FR GB IT NL**

(56) References cited:
**BE-A- 560 925**
**DE-B- 1 228 803**
**GB-A- 1 195 902**
**DE-A- 1 720 531**
**FR-A- 2 184 645**
**US-A- 4 363 907**

(73) Proprietor: **KANEGAFUCHI KAGAKU KOGYO KABUSHIKI KAISHA**
**2-4 Nakanoshima 3-chome**
**Kita-ku Osaka-shi Osaka-fu 530(JP)**

(72) Inventor: **Seiichi, Mori**
**521, 6 Maikodai 6-chome**
**Tarumi-ku Kobe(JP)**
Inventor: **Kazuhide, Fujimoto**
**31-17, Shioyacho 6-chome**
**Tarumi-ku Kobe(JP)**
Inventor: **Satoshi, Tonoki**
**1020, 9-30 Maikodai 2-chome**
**Tarumi-ku Kobe(JP)**

(74) Representative: **Kinzebach, Werner, Dr.**
**Patentanwälte Reitstötter, Kinzebach und Partner Sternwartstrasse 4 Postfach 86 06 49**
**W-8000 München 86(DE)**

EP 0 094 650 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to flame-retarded resin compositions and flame-retarded articles obtainable from said resin compositions.

The term 'flame-retardant electrical laminate' as used herein means any and all laminates and metal-clad laminates which are used as base boards for mounting electronic components thereon, with a thickness ranging from 0.5 to 5 mm and corresponding to UL94 V-O, for instance.

Recent years have witnessed an increasing need for improved flame-retardancy in unsaturated polyester resins in various segments of industry. It is well known that a compound containing halogen such as bromine or chlorine is useful for enhancing the flame resistance of unsaturated polyester resins. Thus the desired object can be accomplished by adding such a compound to the resin or using the same as a component of the resin. Of such products, halogen-containing unsaturated polyester resins contain halogen in the unsaturated alkyd structure of the resin, and such a halogen-containing unsaturated alkyd is either synthesized using a halogen-containing polyhydroxy component and/or polybasic carboxylic acid component or synthesized by introducing a halogen (post-halogenating) into an unsaturated alkyd prepared from usual components. The halogen-containing polyhydroxy compound commonly employed is 2,2-dibromoneopentyl glycol and the halogen-containing polybasic carboxylic acid employed generally includes tetrabromophthalic acid, tetrachlorophthalic acid and chlorendic acid and the corresponding acid anhydrides. The unsaturated alkyd to be post-halogenated can be obtained using a dibasic acid (anhydride) containing a non-$\alpha,\beta$-unsaturation such as tetrahydrophthalic anhydride or endic anhydride.

The halogen-containing unsaturated polyester resin is a mixture of the above-mentioned halogen-containing unsaturated alkyd and a cross-linking monomer. The cross-linking monomer may be one that is generally used in the ordinary unsaturated polyester resins.

However, the prior art halogen-containing unsaturated polyester resins have many disadvantages. Thus, such a known halogen-containing unsaturated polyester resin itself and, therefore, the flame-retardant resin composition based thereon are too high in viscosity to efficiently impregnate a glass or paper base in the production of laminates, thus failing to ensure a satisfactory workability. Moreover, any shaped article obtained therefrom undergoes, on exposure to high temperature or high temperature and humidy conditions, intense discoloration or losses of its electrical characteristics. In the electrical and electronic fields, shaped articles, laminated insulation boards, printed circuit boards, etc. are required to meet exacting product specifications in terms of flame resistance, heat resistance, mechanical properties, electrical characteristics, etc. and rigorous process specifications in terms of punching quality at low temperature, etc.

The DE-A 17 20 531 discloses flame-retarded halogenated polyester resin compositions which can be obtained by synthesizing the polyester free of $\alpha$, $\beta$-ethylenically unsaturated bonds and then halogenating the polyester. The halogenated polyesters can be used in coating compositions or can be reacted with isocyanate containing compounds to halogenated polyurethanes. If the halogenated polyesters contain also $\alpha,\beta$-ethylenically unsaturated bonds they can be cross-linked with vinylsubstituted monomers. According to example 19 of this document an alkyd resin is prepared by reacting ethylene glycol, maleic anhydride, phthalic anhydride and dicyclopentadiene in a two-step reaction. In the first step maleic anhydride and phthalic anhydride are reacted with ethylene glycol to the corresponding half-ester. The half-ester is then in a second step condensed with dicyclopentadiene.

GB-A-1 195 902 discloses a flame-retardant polyester which can be prepared by condensation of a polyhydric alcohol and a polycarboxylic acid and, thereafter, halogenating said polyester with bromine, hydrogen bromide, chlorine or hydrogen cloride. Suitable polycarboxylic acids include Diels-Alder addition products of cyclopentadiene and maleic or itaconic acids. One method for preparing the polyesters, e.g. the half-ester method, comprises pre-reacting an organic acid such a maleic anhydride and an alcohol, such as glycol to obtain an ester-acid prior to the addition of dicyclopentadiene.

It is, therefore, an object of this invention to provide a flame-retarded resin composition free from the above-mentioned disadvantages and a flame-retardant resin article obtainable from said resin composition.

There is provided in accordance with this invention a flame-retarded resin composition comprising (1) a halogen-containing unsaturated alkyd resin obtainable by post-halogenating a polycondensate of maleic acid/dicyclopentadiene monoester, an $\alpha,\beta$-unsaturated dicarboxylic acid and a polyhydric alcohol, said polycondensate containing 40 to 80 mole percent of said maleic acid/dicyclopentadiene monoester based on the total amount of acid components of said polycondensate; (2) an unsaturated polyester resin having a soft segment moiety as its polyol or acid component in an amount not exceeding 60 percent based on the total weight of the composition; and (3) a cross-linking monomer.

The above-mentioned halogen-containing unsaturated alkyd can be produced by reacting said maleic acid/dicyclopentadiene monoester with an α,β-unsaturated dicarboxylic acid and a polyhydric alcohol in a single or multiple step and post-halogenating the resulting unsaturated alkyd.

First, the halogen-containing unsaturated alkyd and the flame-retardant unsaturated polyester resin composition based on the same will be explained in detail.

The dicyclopentadiene (hereinafter briefly, DCPD)-containing unsaturated alkyd is already known. Such alkyds can be obtained by reacting DCPD with an unsaturated polybasic carboxylic acid and a polyhydric alcohol, and if necessary further with a saturated polycarboxylic acid.

The unsaturated polybasic carboxylic acid is an unsaturated dicarboxylic acid such as maleic anhydride, or fumaric acid, and the polyhydric alcohol may for example be ethylene glycol, propylene glycol, diethylene glycol, dipropylene glycol, glycerin, trimethylolpropan, or pentaerythritol. The saturated polybasic carboxylic acid may for example be phthalic anhydride, isophthalic acid, terephthalic acid, adipic acid, sebacic acid, azelaic acid, trimellitic acid, or pyromellitic acid.

In reacting the maleic acid/DCPD monoester (a) with a polyhydric alcohol (b) and a polybasic carboxylic acid (c) either directly or after formation of an oligo ester, the molar ratio of (a) to all the reactants [(a)/(a) + (b) + (c)] is preferably not less than 20 mole percent. If the above molar ratio is less than 20%, the density of non-α,β-unsaturated ethylene groups and, hence, the halogen content will not be sufficient and, accordingly, in order to ensure an adequate flame resistance, a large amount of an addition-type flame retardant must be added so that the cost of production is increased. Such a flame retardant, of low molecular weight, would cause bleeding on heating and excessive plasticization, leading to unsatisfactory physical properties.

The maleic acid/DCPD monoester is obtainable by reacting DCPD with maleic acid (or maleic anhydride and water) and is represented by the formula:

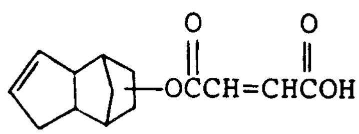

The desired unsaturated alkyd can be obtained by subjecting this maleinized DCPD to dehydrative condensation with the polybasic carboxylic acid and polyhydric alcohol components at a temperature of about 150 to 210 ° C. Alternatively, it can also be produced by subjecting the polybasic carboxylic acid and polyhydric alcohol to dehydrative condensation to form an oligo ester and, then, adding maleinized DCPD for further condensation. With the progress of reaction, the maleic acid groups originating from the maleinized DCPD and the maleic anhydride added are fumarated. The fumaration rate

$$\left(= \frac{\text{fumaric groups}}{\text{maleic groups + fumaric groups}} \times 100\right)$$

varies with reaction conditions and generally can be controlled to an optional value above 50%. Moreover, the reaction conditions can be adjusted to give a high reaction rate, i.e. a smaller acid number, according to the purpose.

The unsaturated alkyd obtained in the above manner is dissolved in a suitable solvent such as methylene chloride, and benzene and a halogen is then bubbled into the solution or added dropwise thereto for halogenation. The solvent is then distilled off to leave a halogen-containing unsaturated alkyd. A cross-linking monomer is further dissolved, whereby the desired halogen-containing unsaturated polyester resin composition is obtained.

The cross-linking monomer is most typically represented by styrene but other monomers such as α-methylstyrene, vinyltoluene, chlorostyrene, divinylbenzene, $C_1$-$C_{10}$ alkyl acrylates, $C_1$-$C_{10}$ alkyl methacrylates, diallyl phthalate,and triallyl cyanurate, and mixtures thereof with styrene may also be employed.

In reacting maleinized DCPD (a) with the polyhydric alcohol (b) and polybasic carboxylic acid (c) either directly or after formation of an oligo ester, the molar ratio of maleinized DCPD to all the acid components [(a)/(a) + (c)] is preferably set between 40 and 80 mole percent.

If the ratio of maleinized DCPD is less than 40 mole %, the density of non-$\alpha,\beta$-unsaturated ethylene groups and, hence, the halogen content are too low and in order to ensure an adequate flame resistance, a large amount of an addition-type flame retardant must be added so that the cost of production is inevitably increased. Moreover, as aforesaid, the use of such a low-molecular flame retardant exerts an adverse-influence on the physical properties of the product. If the ratio of maleinized DCPD is over 80 mole %, the resulting resin becomes hard and brittle and at the same time, the concentration of $\alpha,\beta$-unsaturated ethylene groups is increased so much that the storage stability of the composition is adversely affected.

When the ratio of maleinized DCPD to all the acid components is somewhere between 40 and 80 mole %, both the desired flame retardant characteristic and the desired low-temperature punching characteristic are obtained. Moreover, this range is most suited for the production of flame-retardant electrical laminates having sufficient resistance to thermal softening as well as desirable electrical characteristics.

To modify the characteristics of the unsaturated polyester in the practice of this invention, it is possible to employ small amounts of monofunctional organic acids and alcohols in the condensation reaction. Among the compounds usable for this purpose are fatty acids and alcohols containing about 8 to 22 carbon atoms. Thus, for example, lauric acid, palmitic acid, stearic acid, oleic acid, lauryl alcohol, and oleyl alcohol may be mentioned.

The unsaturated alkyd which is obtainable by reacting maleinized DCPD with a polyhydric alcohol and the remainder of the acid component is such that the terminals of each molecule are mostly blocked by maleinized DCPD and is of low molecular weight, with the result that a large amount of halogen can be incorporated in the alkyd by adding the halogen to the non-$\alpha,\beta$-unsaturated ethylene groups of the cyclopentene ring. Moreover, it is thus possible to prepare a halogen-containing unsaturated polyester resin composition having a low viscosity. Furthermore, the cured resin obtainable therefrom has an excellent heat resistance because of the presence of bulky DCPD structures, and is less hygroscopic probably due to the hydrophobic nature thereof, thus accounting for the improved characteristics after humidity loading.

While a desired amount of halogen can be added to the double bonds in the cyclopentene rings of maleinized DCPD molecules, it is preferable that 80 to 100 percent of the double bonds be halogenated for ensuring a sufficient flame retardant effect.

The flame-retardant unsaturated polyester resin composition contains blended therewith a maximum of 60 percent of a hardness control resin based on the total weight of the composition. The hardness control resin is an unsaturated polyester containing a soft segment material as its polyol or acid component. Thus, for example, Polymal® 6320F (Takeda Chemical Industries, Ltd.), Rigolac® 70F (Showa High Polymer Co., Ltd.) and Ester® F2240 (Mitsui Toatsu Chemicals, Inc.) may be mentioned as preferred examples. The blending proportion of such hardness control resin of course depends on the physical property level desired in the final resin composition but generally speaking may range from 15 to 45 percent.

It was found that by adding 0.1 to 10 weight percent of an epoxy compound to the resin composition of this invention, the coloration of the resin can be drastically reduced and its stability against heat and ultraviolet light can also be improved in remarkable degrees.

Thus, when 0.1 to 10 weight percent of an epoxy compound is added to the halogen-containing flame-retardant unsaturated polyester resin, the color of the latter increases in lightness and even if the resin is exposed to high temperature or ultraviolet light in the course of processing or in the use of the shaped article, the thermal and light degradations of the resin are markedly prevented. Moreover, it is least likely that the epoxy compound so added will adversely affect the mechanical properties, flame resistance, electrical resistance and other characteristics of the shaped article but rather the epoxy compound tends to improve the electrical resistance of the final product. Thus, there has been found substantially no untoward effect of addition of an epoxy compound.

The term 'epoxy compound' as used herein means virtually any and all epoxy compounds. Exemplary species include such low molecular weight monoepoxy compounds such as epichlorohydrin, glycidyl acrylate, glycidyl methacrylate,and allyl glycidyl ether and epoxy resins such as bisphenol A diglycidyl ether. Moreover, epoxidized soybean oil, epoxidized polybutadiene, etc. may also be employed. Particularly effective are epichlorohydrin, glycidyl acrylate, glycidyl methacrylate, allyl glycidyl ether, and other epoxy compounds having low epoxide equivalents, such as bisphenol A diglycidyl ether.

The level of addition of said epoxy compound is generally 0.1 to 10 weight percent, preferably 0.5 to 10 weight percent, and for still better results, 0.5 to 5 weight percent. If its amount is too small, the degrees of improvement in thermal stability and light stability will not be sufficient, while the addition of an excessively large amount will interfere with the mechanical strength and other properties of the final product. Of the above-mentioned low-epoxide equivalent compounds, those containing cross-linkable groups such as glycidyl acrylate, glycidyl methacrylate,and allyl glycidyl ether and epoxy resins represented by bisphenol

A diglycidyl ether are especially desirable, for these epoxy compounds produce very remarkable stabilizing effects without causing bleeding and other troubles and are rather conducive to improved electrical characteristics.

It was further discovered that the coloration of the resin can also be remarkably reduced and its thermal stability improved by adding a phosphorous acid ester to the resin composition of this invention.

Thus, the addition of 0.1 to 10 weight percent of a phosphorous acid ester to the flame-retardant halogen-containing polyester resin results in an increase in lightness of resin color and in a decreased thermal degradation of the resin on exposure to high temperature in the course of processing or in the use of the final product.

The term 'phosphorous acid ester' as used herein means virtually any and all phosphorous acid esters, although di- and tri-esters of phosphorous acid are preferred for the purposes of this invention.

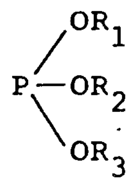

The di-ester of phosphorous acid, referring to the above formula, is a phosphorous acid ester in which one of $R_1$, $R_2$ and $R_3$ is H with the other two being alkyl, aryl or/and other substituents, and the triester is a phosphorous acid ester in which all or $R_1$, $R_2$ and $R_3$ are such substituents. Examples of said di-ester include dimethyl phosphite, diethyl phosphite, dibutyl phosphite, diphenyl phosphite, etc., and examples of the tri-ester include trimethyl phosphite, triethyl phosphite, triisopropyl phosphite, tridecyl phosphite, triphenyl phosphite, and trichloroethyl phosphite.

Phosphorous acid thioesters, for example a thioester of the following formula, may also be employed in the practice of this invention and falls within the scope of the invention.

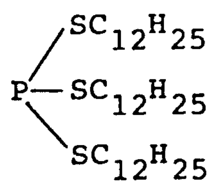

The level of addition of said phosphorous acid ester is generally 0.1 to 10 weight percent, preferably 0.5 to 5 weight percent, and for still better results, 0.5 to 3 weight percent. If the addition level of said phosphorous acid ester is too small, there cannot be realized a sufficient improvement in thermal stability, while the addition of an excessive amount will adversely affect the mechanical strength and other properties of the product.

Of the above-mentioned di- and tri-esters of phosphorous acid, triphenyl phosphite is globally the most desirable because it is substantially odorless, has satisfactory storage stability, and is inexpensive.

Further, the resin composition of this invention may contain an independent or addition-type flame retardant other than organohalogen compounds. Preferred are such inorganic flame retardants as antimony trioxide, zinc borate, aluminum hydroxide, etc. Also desirable are non-halogenated phosphoric acid or phophorous acid esters, and halogenated phosphoric acid esters. As examples thereof, trioctyl phosphate, triphenyl phosphate, tricresyl phosphate, tris(chloroethyl)phosphate, tris(chloropropyl) phosphate, etc.

Moreover, if necessary, various other additives such as fillers, antioxidants, lubricants,and inorganic pigments can also be incorporated.

The resin composition according to this invention can be cured with any of the common organic peroxy compounds, although other curing agents may also be employed. It is also possible to employ conventional curing catalysts such as those responsive to light and other radiations, either alone or in combination with said organic peroxy compound.

The flame-retardant article obtainable by molding and curing the above-mentioned flame-retardant resin composition will now be described. The shaped article that can be obtained from the flame-retardant unsaturated polyester resin composition described above has satisfactory heat resistance and flame retardant properties and can be made available in a broad range of forms such as castings, SMC, BMC and laminates for automotive, boat, electrical and electronic, architectural and other industries. Particularly in electrical and electronic applications, where stringent specifications such as those of the Underwriters' Laboratory, U.S. must be satisfied in the flame retardancy, heat resistance, mechanical properties, electrical characteristics, low-temperature punching quality, etc. of moldings, laminated insulators, and printed circuit boards, the resin composition of this invention is fully capable of meeting the specifications.

Therefore, the term 'article' as used in this specification and the claims appended thereto means any and all of such products as the boards produced by casting the resin composition in molds, various pipes and bars, electrical parts and other shaped articles, various flame-retardant building materials made up of the resin composition of this invention and a large proportion of other materials such as calcium carbonate, and asbestos, various fiber-reinforced pipes, etc., and laminated pipes, etc. containing base materials. Particularly, this invention provides electrical laminates featuring excellent flame-retardant, heat-resistant, electric resistance and other electrical characteristics. Such an electrical laminate can be produced by impregnating base members with the resin composition of this invention and laminating the impregnated base members followed by curing. In the case of a metal-clad laminate, a metal foil is laid on one side or on either side of the resin layer and the resin is then cured.

As the base materials, various glass materials such as glass cloth, and glass mats and, preferably, cellulosic base materials and mixtures thereof with glass materials can be employed. More desirably, the base material may be kraft paper or linter paper, which is preferably preimpregnated with resin. In curing the above resin-impregnated material, it is most desirable to effect continuous curing under substantially no-pressure conditions.

The flame-retardant electrical laminate has the following and other advantages.

(1) The high self-extinguishing property specified in UL94, for instance, can be easily ensured.

(2) In the long-term heat resistance test as specified in UL746B, the product of this invention shows a very low thermal aging of bending strength.

(3) Despite its high bending strength and modulus at high temperature, the product of this invention has excellent low-temperature punching quality. Thus, the physical properties which have heretofore been considered to be conflicting can be concurrently realized.

Thus, the industrial value of this invention is very high.

The following examples are intended to illustrate this invention in further detail and should by no means be construed as limiting the scope of the invention. In the examples, all parts and percents are by weight.

## Synthesis of a halogen-containing alkyd

### Example 1

A 3-liter flask fitted with a stirrer, thermometer, reflux condenser and nitrogen inlet pipe was charged with 792 g of DCPD, 588 g of maleic anhydride and 113 g of water and the mixture was heated under stirring in a nitrogen gas stream at 130-140 ° C for 2 hours and a half, whereby maleinized DCPD (A) having an acid value of 228 was obtained in quantitative yield.

Then, 294 g of maleic anhydride, 197 g of ethylene glycol and 337 g of diethylene glycol were added. The reflux tube was replaced with a fractional distillation column and a total condensor was further connected for removal of byproduct water. Condensation with the elimination of water was conducted in a nitrogen stream until an acid value of 20 was obtained. After the internal temperature had dropped to 150 ° C, 830 mg of hydroquinone was added, whereby 2150 g of unsaturated alkyd (B) was obtained.

A 3-liter flask fitted with a stirrer, thermometer, branched drip funnel and nitrogen inlet pipe was charged with 1500 g of the above unsaturated alkyd and 1400 g of methylene chloride, and after dissolution with stirring, the mixture was cooled with ice-water to a temperature of 20 ° C or below. Then, in a nitrogen gas stream and at a temperature of 16 to 20 ° C, 610 g of bromine was added dropwise from the drip funnel over a period of one hour and a half. After completion of the reaction, the drip funnel was disconnected and a distillation column was attached. The methylene chloride was distilled off at a bath temperature not exceeding 100 ° C and the pressure was finally reduced to 13.3 mbar (10 mmHg), whereby the methylene chloride was completely removed. The above procedure yielded 2105 g of the bromide (I) (halogen-containing unsaturated alkyd, the same applies hereinafter). This brominated compound had an acid value of 19.4 and a bromine content of 28.6%.

Example 2

A 3-liter flask fitted with a stirrer, thermometer, fractional distillation column and nitrogen gas inlet pipe was charged with 348 g of fumaric acid, 194 g of ethylene glycol and 334 g of diethylene glycol, and dehydrative condensation was conducted in a nitrogen gas stream at 150-195 °C until the acid value of the mixture was 8.5.

Then, 1488 g of maleinized DCPD (A) was added and the mixture was further reacted at 150 to 196°C until the acid value was 18.3. After completion of this reaction and after the internal temperature had dropped to 150°C, 800 mg of hydroquinone was added, whereby 2120 g of unsaturated alkyd (C) was obtained. A mixture of 1500 g of (C) and 1500 g of methylene chloride was cooled to a temperature not exceeding 20°C and 630 g of bromine was added dropwise at a temperature of 16 to 20°C over a period of 1 hour and 15 minutes. Then, the methylene chloride was distilled off to leave 2125 g of bromide (II). This brominated product had an acid value of 14.3 and a bromine content of 29.5%.

Example 3

In the same manner as Example 2, 348.6 g of isophthalic acid, 137 g of ethylene glycol and 203 g of glycerin were reacted in a nitrogen gas stream at 150 to 200°C until an acid value of 12.5 was obtained.

Then, 1562 g of maleinized DCPD was added and the mixture was further reacted at 150 to 195°C, whereby an unsaturated alkyd (D) having an acid value of 32.5 was obtained. After completion of the reaction, 820 mg of hydroquinone was added. Then, as a mixture of 1500 g of (D) and 1500 g of methylene chloride was held at 20 to 23°C, 665 g of bromine was added dropwise over a period of 1 hour and 20 minutes. The methylene chloride was then distilled off to give 2160 g of bromide (III). This brominated product had an acid value of 23.5 and a bromine content of 30.6%.

Example 4

In the same manner as Example 1, 1493 g of maleinized DCPD, 294 g of maleic anhydride and 391 g of ethylene glycol were reacted to an acid value of 19.5, followed by addition of 790 mg of hydroquinone to give 1985 g of unsaturated alkyd (E). As a mixture of 1500 g of (E) and 1500 g of methylene chloride was held at 45 to 47°C, 672 g of bromine was added dropwise, whereby a bromide (IV) having an acid value of 15.0 and a bromine content of 30.9% was obtained.

Production of halogen-containing unsaturated polyester resins

Example 5

Each of the brominated alkyds (I) through (IV) produced in Examples 1 to 4 was dissolved in styrene to a styrene concentration of 28%, whereby halogen-containing unsaturated polyester resins (I') to (IV') were obtained.

Tables 1 and 2 show properties or the halogen-containing unsaturated alkyds (I) through (IV) and of the halogen-containing unsaturated polyester resins (I') through (IV').

Table 1

| Halogen-containing Unsaturated Alkyds | | | | |
|---|---|---|---|---|
| | (I) | (II) | (III) | (IV) |
| Bromine content, % | 28.6 | 29.5 | 30.6 | 30.9 |
| Acid value | 19.4 | 14.3 | 23.5 | 15.0 |

Table 2

| Halogen-containing Unsaturated Polyester Resins | | | | |
|---|---|---|---|---|
| | (I') | (II') | (III') | (IV') |
| Viscosity, poises, 20 °C | 5.3 | 5.6 | 14.8 | 4.2 |
| Bromine content, % | 20.6 | 21.2 | 22.0 | 21.8 |
| Acid value | 14.7 | 10.6 | 17.4 | 10.8 |

Examples 6 to 9

To the halogen-containing unsaturated polyester resin (IV') was added 2 parts of Epicoat® 828 (Shell Chemical, bisphenol A diglycidyl ether), to prepare a flame-retardant resin composition (IV-1'). Similarly, 5 parts of glycidyl methacrylate was added to the same resin to give (IV-2'). Moreover, (IV-3') was prepared by adding 1.5 parts of triphenyl phosphite.

Table 3 shows the properties of (IV'), (IV-1'), (IV-2') and (IV-3').

Table 3

| | 1 | 2 | 3 | 4 |
|---|---|---|---|---|
| Resin composition | (IV') | (IV-1') | (IV-2') | (IV-3') |
| Color (Gardner) | 13-15 | 6-8 | 5-7 | 7-9 |
| Bromine liberation*: % | 0.6 | ND | ND | ND |

* One part of BPO (benzoyl peroxide) was added to each flame-retardant resin composition, the mixture was poured into a Teflon mold 3 mm x 25 mm x 40 mm and cured in situ at 100 °C for 2 hours. Each product was divided into 8 equal parts and the amount of HBr liberated during 10 hours at 180 °C was converted to the amount of bromine. ND: not detected.

Pretreatment of the base material

Example 10

35 Weight parts of water containing 12 weight parts of methylol melamine (Japan Carbide Industry, Nicaresin® S-305) was poured with intense stirring into 65 weight parts of methanol containing 1.8 weight parts of oleic acid monoglyceride (Riken Vitamin Oil Co., Ltd., Rikemal® OL-100) to prepare a treating suspension. A kraft paper with a thickness of 285 µm (microns) was immersed in this suspension and, then, dried at 120 °C for 20 minutes to prepare a base material. The deposition of the treating agent on the paper was 9.7%.

Production of flame-retardant unsaturated polyester compositions and laminates

Example 11

55.9 parts of the bromine-containing unsaturated polyester resin (I') obtained in Example 5, 26.0 parts of Polymal® 6320F(Takeda Chemical Industries, Ltd., soft unsaturated polyester resin), 7 parts of aluminum hydroxide, 3.5 parts of antimony trioxide, 1 part of Perhexa® 3M (Japan Oil and Fat Co., Ltd., organic peroxide curing catalyst) and 6.6 parts of styrene were milled well on a roll to produce a flame-retardant unsaturated polyester resin composition (A).

This composition was used to impregnate the above pretreated paper base and five sheets of the impregnated base were laminated. Both surfaces of the laminate were covered with a polyethylene terephthalate film having a thickness of 35 μm (microns) and the assembly was cured at 100°C for 15 minutes and, then, at 160°C for 10 minutes to give a finished laminate (A') having a thickness of 1.52 mm.

Example 12

50 Parts of the bromine-containing unsaturated polyester resin (II') obtained in Example 5, 35 parts of Polymal® 6320F, 7 parts of aluminum hydroxide, 3.5 parts of antimony trioxide, 3.5 parts of styrene and 1 part of Perhexa® 3M were kneaded together on a roll to prepare a flame-retardant unsaturated polyester resin composition (B). Using this composition, the same procedure as Example 11 was followed to produce a laminate (B') having a thickness of 1.52 mm.

Example 13

55 Parts of the bromine-containing unsaturated polyester resin (III') obtained in Example 5, 30 parts of Polymal® 6320F, 7 parts of aluminum hydroxide, 3.5 parts of antimony trioxide, 1 part of Perhexa® 3M and 35 parts of styrene were treated in the same manner as in Example 13 to prepare a flame-retardant unsaturated polyester resin composition (C). Using this composition, the same procedure as Example 11 was followed to provide a laminate (C') having a thickness of 1.52 mm.

Example 14

47 Parts of the bromine-containing unsaturated polyester resin (IV') obtained in Example 5, 35 parts of Polymal® 6320F, 7 parts of aluminum hydroxide, 3.5 parts of antimony trioxide, 4.5 parts of styrene monomer, 2 parts of tricresyl phosphate, 1 part of cumene hydroperoxide and 0.2 part of 6% cobalt naphthoate were mixed thoroughly in a homogenizer to prepare a flame-retardant resin composition (D-1). Then, as in Example 11, a laminate (D-1') having a thickness of 1.52 mm was produced.

Example 15

The same procedure as Example 14 was followed except that (IV-1') was used in lieu of (IV') to give a flame-retardant resin composition (D-2). Using this composition, a laminate (D-2') having a thickness of 1.54 mm was produced in the same manner as Example 14.

Example 16

The same procedure as Example 14 was followed except that (IV-2') was used in lieu of (IV') to give a flame-retardant resin composition (D-3) and a laminate (D-3') having a thickness of 1.53 mm.

Example 17

The same procedure as Example 14 was followed except that (IV-3') was used in lieu of (IV') to give a flame-retardant resin composition (D-4) and a 1.53 mm thick laminate (D-4').

Table 4 shows the properties of the flame-retardant resin compositions produced in Examples 11 to 17.

Table 4

| | Examples | | | | | | |
|---|---|---|---|---|---|---|---|
| | 11 | 12 | 13 | 14 | 15 | 16 | 17 |
| Resin composition | (A) | (B) | (C) | (D-1) | (D-2) | (D-3) | (D-4) |
| Styrene content, % | 31.9 | 30.5 | 30.0 | 29.6 | 29.0 | 28.2 | 29.2 |
| Bromine content, % | 11.7 | 10.6 | 12.1 | 10.2 | 10.0 | 9.71 | 10.0 |
| Viscosity, Pas (poises), 20 ° C | 0.34 (3.4) | 0.39 (3.9) | 0.86 (8.6) | 0.54 (5.4) | 0.55 (5.5) | 0.53 (5.3) | 0.55 (5.5) |
| Impregnation time*, seconds | 28 | 33 | 40 | 36 | 36 | 34 | 38 |

* The time till complete penetration of the resin into the melamine-treated base material.

Table 5 shows the properties of the laminates produced in Examples 11 to 17.

Table 5

| | Examples | | | | | | |
|---|---|---|---|---|---|---|---|
| | 11 (A') | 12 (B') | 13 (C') | 14 (D-1') | 15 (D-2') | 16 (D-3') | 17 (D-4') |
| Insulation resistance, ohms (D-2/100) | $2.16 \times 10^8$ | $2.46 \times 10^8$ | $5.68 \times 10^8$ | $4.35 \times 10^8$ | $4.52 \times 10^8$ | $6.02 \times 10^8$ | $4.00 \times 10^8$ |
| Bending moeulus (kg/mm², 100°C) | 295 | 327 | 250 | 320 | 305 | 330 | 310 |
| Flame retardancy (UL94) | VO | VO | VO | VO | VO | VO | VO |
| Bending strength retentivity, % (180°C x 5 days) | 70 | 72 | 68 | 74 | 78 | 82 | 76 |
| Thermal discoloration* (150°C x 10 days) | △ | △ | △ | ○ | ◎ | ◎ | ◎ |
| Color fastness to UV | △ | △ | △ | △ | ○ | ◎ | △ |
| Punching quality | Punching temperature, 50-80°C | | | | | | |
| End face | ○ | △ | △ | ◎ | ◎ | ◎ | ◎ |
| Surface | ◎ | ○ | ○ | ◎ | ◎ | ◎ | ◎ |
| Hole | ◎ | ◎ | ○ | ◎ | ◎ | ◎ | ◎ |

* △ Discolored dark brown

○ Discolored brown

◎ Slight discoloration (yellowish brown)

Test method:

Color fastness to UV : Irie Seisakusho K.K., a mercury-vapor lamp for physicochemical tests; irradiated at a distance of 30 cm from above for 15 minutes.

| | |
|---|---|
| Insulation resistance: | JIS C-6481 |
| Bending modulus: | Same as above |
| Punching quality: | 1 mm in diameter, a metal die having a series of 23 pins at a pitch of 2.54 mm. |

## Claims

1. A flame-retarded resin composition comprising (1) a halogen-containing unsaturated alkyd resin obtainable by post-halogenating a polycondensate of maleic acid/dicyclopentadiene monoester, an α,β-unsaturated dicarboxylic acid and a polyhydric alcohol, said polycondensate containing 40 to 80 mole percent of said maleic acid/dicyclopentadiene monoester based on the total amount of acid components of said polycondensate; (2) an unsaturated polyester resin having a soft segment moiety as its polyol or acid component in an amount not exceeding 60 percent based on the total weight of the composition; and (3) a cross-linking monomer.

2. A flame-retarded resin composition as claimed in claim 1, wherein said halogen is bromine.

3. A flame-retarded resin composition as claimed in claim 1 or 2, wherein a portion of said α,β-unsaturated dicarboxylic acid is substituted with a dicarboxylic acid free of α,β-unsaturation.

4. A flame-retarded resin composition as claimed in anyone of claims 1 to 3, wherein said unsaturated polyester resin having a soft segment is present in an amount of 15 to 45 percent based on the total weight of the composition.

5. A flame-retarded resin composition as claimed in anyone of claims 1 to 4, wherein said cross-linking monomer is styrene, α-methylstyrene, vinyltoluene or chlorostyrene.

6. A flame-retarded article fabricated from the composition as claimed in anyone of claims 1 to 5.

## Revendications

1. Composition de résine ignifugée comprenant (1) une résine alkyde insaturée halogénée pouvant être obtenue en post-halogénant un polycondensat de monoester d'acide maléique/dicyclopentadiène, un acide dicarboxylique α,β-insaturé et un polyalcool, ce polycondensat contenant 40 à 80 moles pourcent de ce monoester d'acide maléique/dicyclopentadiène par rapport à la quantité totale des constituants acides de ce polycondensat; (2) une résine polyester insaturée ayant un segment souple sous la forme de son constituant polyol ou acide, dans une proportion ne dépassant pas 60% par rapport au poids total de la composition, et (3) un monomère de réticulation.

2. Composition de résine ignifugée selon la revendication 1, dans laquelle cet halogène est le brome.

3. Composition de résine ignifugée selon les revendications 1 ou 2, dans laquelle une partie de cet acide dicarboxylique α,β-insaturé est substitué par un acide dicarboxylique exempt d'insaturation α,β.

4. Composition de résine ignifugée selon l'une quelconque des revendications 1 à 3, dans laquelle cette résine polyester insaturée ayant un segment souple est présente dans une proportion de 15 à 45 % par rapport au poids total de la composition.

5. Composition de résine ignifugée selon l'une quelconque des revendications 1 à 4, dans laquelle ce monomère de réticulation est le styrène, l'α-méthylstyrène, le vinyltoluène ou le chlorostyrène.

6. Article ignifugé fabriqué à partir de la composition selon l'une quelconque des revendications 1 à 5.

## Patentansprüche

1. Flammhemmende Harzzusammensetzung, umfassend (1) ein halogenenthaltendes ungesättigtes Alkydharz, das erhältlich ist, indem man ein Maleinsäure/Dicyclopentadien-monoester Polykondensat, eine α,β-ungesättigte Dicarbonsäure und einen Polyalkohol posthalogeniert, wobei das Polykondensat 40 bis 80 Molprozent Maleinsäure/Dicyclopentadien-monoester, bezogen auf die Gesamtmenge der Säurekomponenten des Polykondensats, umfaßt; (2) ein ungesättigtes Polyesterharz mit einem Weichsegment als Polyol- oder Säurekomponente in einer Menge, die 60 % des Gesamtgewichtes der Zusammensetzung nicht übersteigt; und (3) ein vernetzendes Monomer.

**2.** Flammhemmende Harzzusammensetzung nach Anspruch 1, worin das Halogen für Brom steht.

**3.** Flammhemmende Harzzusammensetzung nach Anspruch 1 oder 2, worin ein Teil der $\alpha,\beta$-ungesättigten Dicarbonsäure durch eine $\alpha,\beta$-gesättigten Dicarbonsäure ersetzt ist.

**4.** Flammhemmende Harzzusammensetzung nach einem der Ansprüche 1 bis 3, worin das ungesättigte Polyesterharz mit Weichsegment in einer Menge von 15 bis 45 % des Gesamtgewichtes der Verbindung vorhanden ist.

**5.** Flammhemmende Harzzusammensetzung nach einem der Ansprüche 1 bis 4, worin das vernetzende Monomer Styrol, $\alpha$-Methylstyrol, Vinyltoluol oder Chlorstyrol ist.

**6.** Flammhemmende Fabrikate, hergestellt aus den Zusammensetzung nach einem der Ansprüche 1 bis 5.